# EUROPÄISCHE PATENTSCHRIFT

(11) **EP 1 093 904 B1**
(45) Veröffentlichungstag und Bekanntmachung des Hinweises auf die Patenterteilung: **16.10.2002**
(21) Anmeldenummer: 00114713.1
(22) Anmeldetag: 08.07.2000
(51) Int. Cl.: B29C 45/17

(54) **Heisskanaldüse**
Hot runner nozzle
Buse à canal chaud

(30) Priorität: 18.10.1999 DE 19950273
(43) Veröffentlichungstag der Anmeldung: 25.04.2001
(73) Patentinhaber: Otto Männer Heisskanalsysteme GmbH & Co. KG, 79353 Bahlingen (DE)
(72) Erfinder: Würstlin, Walter, 79353 Bahlingen (DE)
(74) Vertreter: Patent- und Rechtsanwaltssozietät, Maucher, Börjes & Kollegen

(56) Entgegenhaltungen:
- WO-A-96/00143
- US-A- 5 263 230

## Beschreibung

Die Erfindung betrifft eine Heißkanaldüse für Spritzgießformen, mit einem einen Durchtrittskanal mit einer Düsenaustrittsöffnung für Schmelze aufweisenden Düsenkörper, an dessen Außenumfang wenigstens ein mantelförmiger Heizkörper zum Beheizen des Düsenkörpers angeordnet ist, wobei der Heizkörper an seinem Außenumfang von einem Hülsenteil umgrenzt ist, und wobei das Hülsenteil und der Heizkörper in radialer Richtung nachgiebig sind.

Eine derartige Heißkanaldüse ist aus US 5 411 392 bekannt. Sie weist einen hülsenförmigen, in axialer Richtung durchgehend geschlitzten Heizkörper auf, der mit seiner Innenseite am Außenumfang des Düsenkörpers anliegt und diesen umgrenzt. Der Heizkörper ist von einem in axialer Richtung durchgehend geschlitzten Hülsenteil umschlossen, daß aus einem federelastischen Werkstoff besteht und in entspannter Ruhelage eine kleinere lichte Weite aufweist als der Außendurchmesser des Heizkörpers. In Gebrauchsstellung wird der Heizkörper durch die Rückstellkraft des federelastischen Werkstoffs des Hülsenteils außenseitig mit einer Klemmkraft druckbeaufschlagt, die den Heizkörper an den Düsenkörper andrückt. Durch das Andrücken des Heizkörpers an den Düsenkörper wird ein geringerer Wärmewiderstand und somit eine gute thermische Kopplung zwischen Heizkörper und Düsenkörper erreicht. Außerdem wird der Heizkörper an dem Düsenkörper festgelegt. Die vorbekannte Heißkanaldüse hat jedoch den Nachteil, daß die Klemmkraft des geschlitzten Halteteils bei Erwärmung nachläßt. Auch kann es aufgrund der beim Beheizen der Heißkanaldüse auftretenden hohen Temperaturen nach längerer Standzeit zu einem Nachlassen der Klemmkraft des Hülsenteils kommen, so daß der Düsenkörper dann nicht mehr ausreichend beheizt wird. Ungünstig ist außerdem, daß das Hülsenteil bei der Montage oder Demontage von dem Heizkörper mittels einer geeigneten Spannvorrichtung gegen die Rückstellkraft seines Federwerkstoffs aufgeweitet werden muß, damit es auf den Heizkörper aufgeschoben bzw. von diesem abgezogen werden kann. Die Montage und Demontage der Heißkanaldüse, wie sie beispielsweise bei Wartungsarbeiten am Heizkörper erforderlich ist, ist deshalb noch vergleichsweise kompliziert.

Aus DE 30 46 471 A1 kennt man auch bereits eine Heißkanaldüse der eingangs genannten Art, die ein in Umfangsrichtung geschlossenes Hülsenteil aufweist, das einen etwas geringeren Innendurchmesser als der Außendurchmesser des Heizkörpers aufweist und das auf den Heizkörper aufgepreßt ist. Der Heizkörper weist eine elektrische Heizwendel mit einer Vielzahl von Windungen auf, die in einer am Außenmantel des Düsenkörpers eingearbeitete Schraubennut eingelegt sind. Dadurch soll der Übergang der von dem Heizkörper erzeugten Wärme auf den Düsenkörper verbessert werden. Die Heißkanaldüse hat jedoch den Nachteil, daß die in die Schraubennut eingelegte Heizwendel praktisch nicht von dem Düsenkörper demontiert werden kann. Die sich während des Betriebs der Heißkanaldüse zwischen dem Hülsenteil und dem Düsenkörper ansammelnden Verschmutzungen können deshalb nicht entfernt werden, wodurch sich die Lebensdauer der Heißkanaldüse entsprechend reduziert.

Aus DE 195 14 487 A1 ist eine Heißkanaldüse der eingangs genannten Art mit einem als Heizwendel ausgebildeten Heizkörper bekannt. Dabei ist die Heizwendel an der Innenseite des Hülsenteils angeordnet und mit diesem verschweißt. Der Innendurchmesser der Heizwendel ist etwas größer als der Außendurchmesser des Düsenkörpers. Das Hülsenteil ist in radialer Richtung von einer Gewindebohrung durchsetzt, in der eine Klemmschraube angeordnet ist, mit der das Hülsenteil gegen den Düsenkörper festklemmbar ist. Nachteilig ist dabei jedoch, daß die an der Innenseite des Hülsenteils angeordnete Heizwendel in Klemmstellung nur an der der Klemmschraube abgewandten Seite des Düsenkörpers anliegt, während an der gegenüberliegenden Seite des Düsenkörpers zwischen dem Düsenkörper und der Heizwendel ein Spalt gebildet ist. Die von der Heizwendel erzeugte Wärme wird deshalb am Umfang des Düsenkörpers ungleichmäßig in diesen eingeleitet.

Aus US 49 68 247 ist ferner eine Heißkanaldüse der eingangs genannten Art bekannt, bei der das Hülsenteil rohrschellenartig mit einem sich in Umfangsrichtung des Heizkörpers erstreckenden Blechstreifen ausgebildet ist, der an seinen aneinander abgewandten Axialenden mit einer Spannvorrichtung verbunden ist, die zum Festspannen des Blechstreifens auf dem Heizkörper und somit zum Andrücken des Heizkörpers an den Düsenkörper ein exzentrisches Spannelement aufweist, daß seitlich neben dem Düsenkörper angeordnet ist. Die Spannvorrichtung ermöglicht zwar in Umfangsrichtung des Heizkörpers ein weitgehend gleichmäßiges Andrücken des Heizkörpers an den Düsenkörper, hat jedoch den Nachteil, daß sie relativ viel Platz benötigt, so daß in der Spritzgießform ein Freiraum für die Spannvorrichtung vorgesehen sein muß. Wegen der im Bereich der Spritzgießform beengten Platzverhältnisse ist dies jedoch häufig nicht oder nur mit großem Aufwand möglich. Außerdem wird durch den Freiraum die Biegesteifigkeit der Spritzgießformteile herabgesetzt, so daß sich diese durch den Spritzgießdruck biegeverformen kann.

Es besteht deshalb die Aufgabe, eine Heißkanaldüse der eingangs genannten Art zu schaffen, die kompakt aufgebaut ist, eine einfache Montage ermöglicht und eine gute thermische Kopplung zwischen dem Heizkörper und dem Düsenkörper aufweist.

Diese Aufgabe wird in Verbindung mit dem Oberbegriff des Patentanspruchs 1 dadurch gelöst, daß das Hülsenteil an seinem Außenumfang von wenigstens einem ringförmigen Spannteil umgrenzt ist, das um seine Längsachse relativ zu dem Hülsenteil zwischen einer Lösestellung und einer Klemmstellungverdrehbar ist, daß die einander zugewandten Flächen des Hülsenteils und des Spannteils jeweils eine von einer konzentrisch zu dieser Längsachse angeordneten Zylindermantelfläche abweichende Formgebung aufweisen, und daß wenigstens eine dieser einander zugewandten Flächen zumindest bereichsweise als Klemmkeilfläche ausgebildet ist, die in Klemmstellung in einer orthogonal zu der Längsachse angeordneten Ebene eine Auflaufschräge aufweist, an der die Fläche des anderen Teils mit einem Auflagebereich anliegt.

Das Spannteil ist also auf einfache Weise durch eine Drehbewegung um seine Längsmittelachse aus der Löse- in die Klemmstellung relativ zu dem Halteteil verdrehbar und mit diesem verklemmbar. Dabei kann das in Klemmstellung befindliche Spannteil durch eine Drehbewegung in umgekehrter Richtung wieder von dem Halteteil gelöst und dann zur Demontage der Heißkanaldüse von dem Düsenkörper axial abgezogen werden. In vorteilhafter Weise ermöglicht die durch das Klemmteil und die Spannhülse gebildete Klemmvorrichtung eine kompakt aufgebaute Heißkanaldüse, bei der sämtliche Teile der Klemmvorrichtung in radialer Richtung dicht benachbart zum Düsenkörper und somit platzsparend angeordnet sind. Die Heißkanaldüse kann deshalb auch bei beengten Platzverhältnissen in eine Spritzgießform eingebaut sein. Dabei bleiben die am Außenumfang des Düsenkörpers angeordneten Teile der Klemmvorrichtung dennoch gut zugänglich. Aufgrund der kompakten Abmessungen der Heißkanaldüse brauchen in der Spritzgießform nur entsrechend kleine Aufnahmen zum Einsetzen der Heißkanaldüse vorgesehen zu sein, was eine hohe Biegesteifigkeit der Spritzgießformteile ermöglicht. Die Heißkanaldüse ermöglicht aber auch eine einfache Montage und Demontage, was besonders bei der Durchführung von Wartungsarbeiten an der Heißkanaldüse und/oder der Spritzgießform vorteilhaft ist.

In Klemmstellung liegt die Auflaufschräge des einen der beiden Teile (Spannteil, Hülsenteil) an dem Auflagebereich des anderen Teiles (Hülsenteil, Spannteil) an, so daß die beiden Teile gegeneinander verspannt sind. Dabei ist der Winkel, den die Auflaufschräge an dem Auflagebereich oder der Auflagestelle mit der durch die Auflagestelle verlaufenden Zylindermantelfläche eines konzentrisch zur Längsmittelachse des Halteteils angeordneten Zylinders einschließt, so ausgebildet daß das Spannteil in Klemmstellung selbsthemmend am Umfang des Hülsenteils festgeklemmt ist. Zwischen dieser Zylindermantelfläche und der Auflaufschräge ist im Auflagebereich ein Keilspalt gebildet, der das beim Verdrehen des Spannteils aus der Löse- in die Klemmstellung zwischen dem Spannteil und dem Hülsenteil wirkende Drehmoment in eine radiale Kraftkomponente übersetzt, die den dem Auflagebereich bildenden Wandungsbereich des Halteteils gegen die Rückstellkraft seines Werkstoffs und/oder diejenige des Werkstoff des Spannteils in Richtung zur Längsmittelachse des Hülsenteils hin ausgelenkt. Dabei wird der ausgelenkte Wandungsbereich des Hülsenteils mit seiner Innenseite direkt oder gegebenenfalls auch indirekt über wenigstens ein zwischen dem Hülsenteil und dem Heizkörper befindliches zwischenelement an den Heizkörper angedrückt. An der dem Auflagebereich abgewandten Seite des Düsenkörpers stützt sich das Hülsenteil innenseitig an wenigstens einer weiteren Stelle am Heizkörper und/oder am Düsenkörper ab, so daß der Heizkörper zwischen dem Hülsenteil und dem Düsenkörper eingeklemmt wird. Dabei wird der gegen die Klemmkraft nachgiebige Heizkörper an den Düsenkörper oder einem gegebenenfalls zwischen dem Düsenkörper und dem Heizkörper vorgesehenen Zwischenteil angedrückt, wodurch eine gute Einkopplung der mittels des Heizkörpers erzeugten Wärme in den Düsenkörper und den diesen durchsetzenden Durchtrittskanal für die Schmelze erreicht wird. Die erfindungsgemäße Heißkanaldüse ermöglicht sowohl über die Länge des Heizkörpers als auch in Umfangsrichtung des Heizkörpers eine weitgehend gleichmäßige Wärmeübertragung auf den Düsenkörper. Da sich der Düsenkörper, der Heizkörper, das Hülsenteil und das Spannteil bei Erwärmung etwa im gleichen Maße ausdehnen, ist die von dem Hülsenteil auf den Heizkörper aufgebrachte Klemmkraft weitgehend von der Temperatur der Heißkanaldüse unabhängig.

Die Klemmkeilfläche kann an der Innenseite des Spannteils angeordnet sein und an der Außenseite des Hülsenteils kann ein beipielsweise durch einen Nocken gebildeter Vorsprung vorgesehen sein, der in Klemmstellung direkt oder indirekt über wenigstens ein Zwischenteil gegen die Klemmfläche des Spannteils festgeklemmt bzw. mit dieser verspannt ist. Selbstverständlich ist aber auch eine umgekehrte Anordnung möglich, bei der die Klemmkeilfläche an der Außenseite des Hülsenteils und der Nocke oder der Vorsprung an der Innenseite des Spannteils angeordnet ist. Es können aber auch an der Innenseite des Spannteils und an der Außenseite des Hülsenteils Klemmkeilflächen vorgesehen sein, die in Klemmstellung direkt oder indirekt über wenigstens ein Zwischenteil gegeneneinander verklemmt sind.

Vorteilhaft ist, wenn das Hülsenteil als geschlitztes Hülsenteil mit einem durchgehend über seine axiale Erstreckung verlaufenden, an seinen Stirnseiten randoffenen Schlitz ausgebildet ist. Dadurch wird während des Spannvorganges eine gleichmäßige Reduzierung des Durchmessers des Hülsenteiles ermöglicht. Die Klemmkraft kann dann noch wirksamer auf den Heizkörper übertragen werden. Zweckmäßigerweise besteht das Hülsenteil aus einem durch Beaufschlagung mit der Klemmkraft elastisch verformbarem Material. Der Schlitz verläuft vorzugsweise parallel zur Längsachse des Hülsenteils kann aber auch schräg dazu verlaufen und beispielsweise spiralförmig ausgebildet sein.

Bei einer besonders vorteilhaften Ausführungsform der Erfindung ist vorgesehen, daß wenigstens eine der einander zugewandten Flächen des Hülsenteils und des Spannteils mehrere, insbesondere drei in Umfangsrichtung versetzt zueinander angeordnete, jeweils eine Klemmkeilfläche aufweisende Bereiche hat, und daß diese Bereiche in Klemmstellung in einer orthogonal zur Längsachse des Spannteils angeordneten Ebene an einer dem jeweiligen Bereich jeweils zugeordneten Auflagestelle des anderen Teils anliegt. Die Klemmkräfte können das in Klemmstellung des Spannteils noch gleichmäßiger an mehreren in Umfangsrichtung versetzt zueinander angeordneten Stellen und dem Hülsenteil auf den Heizkörper und von diesem auf den Düsenkörper übertragen werden. Der Heizkörper wird dadurch besonders gleichmäßig an den Düsenkörper angedrückt, was eine gleichmäßige Wärmeeinkopplung in den Düsenkörper ermöglicht.

Bei einer vorteilhaften Ausführungsform der Erfindung ist vorgesehen, daß das Spannteil ring- oder hülsenförmig ausgebildet ist und an unterschiedlichen, in Umfangsrichtung zueinander versetzten Stellen unterschiedliche Innendurchmesser aufweist, daß das Hülsenteil an unterschiedlichen, in Umfangsrichtung zueinander versetzten Stellen unterschiedliche Außendurchmesser aufweist, daß der kleinste Innendurchmesser des Spannteils größer als oder gleich dem kleinsten Außendurchmesser des Hülsenteils und der größte Innendurchmesser des Spannteils größer als oder gleich dem größten Außendurchmesser des Hülsenteils ist, und daß der kleinste Innendurchmesser des Spannteils kleiner als der größte Außendurchmesser des Hülsenteils ist. Die durch das Spannteil, das Hülsenteil und den Düsenkörper gebildete Klemmvorrichtung ermöglicht dann eine besonders gleichmäßige radiale Druckbeaufschlagung des Heizkörpers.

Vorteilhaft ist, wenn das Spannteil als Spannhülse ausgebildet ist, die sich vorzugsweise über die gesamte Länge des Hülsenteils erstreckt. Die von dem Heizkörper freigesetzte Wärme kann dann in axialer Richtung des Düsenkörpers besonders gleichmäßig auf diesen übertragen werden.

Zweckmäßigerweise weist das Spannteil Angriffsstellen zum Verbinden mit einem Betätigungswerkzeug auf, wobei die Angriffsstellen vorzugsweise als am Außenumfang des Spannteils angeordnete Aufnahmevertiefungen ausgebildet sind. An den Angriffsstellen des Spannteils kann dann ein Betätitungswerkzeug zum Verdrehen des Spannteils relativ zu dem Hülsenteil angesetzt werden, beispielsweise ein Hakenschlüssel oder dergleichen einen Hebelarm aufweisendes Werkzeug.

Zweckmäßigerweise ist zwischen dem Spannteil und dem Düsenkörper eine Verdrehsicherung angeordnet. Diese kann beispielsweise an dem in Gebrauchsstellung der Düsenaustrittsöffnung des Düsenkörpers abgewandten stirnseitigen Ende des Spannteils wenigstens einen Vorsprung aufweisen, der in Gebrauchsstellung in eine dazu passende Aufnahmevertiefung des Düsenkörpers eingreift. Selbstverständlich ist auch eine umgekehrte Anordnung möglich, bei welcher der Vorsprung an dem Düsenkörper und die Aufnahmevertiefung an dem Hülsenteil angeordnet ist. Durch die Verdrehsicherung wird beim Verdrehen des Spannteils zwischen der Lösestellung und der Klemmstellung ein Mitdrehen des Hülsenteils verhindert.

Vorteilhaft ist, wenn das Hülsenteil und/oder das Spannteil als Blechumformteil ausgebildet ist, daß zwischen in Umfangsrichtung benachbart zueinander angeordneten, jeweils eine Klemmkeilfläche aufweisenden Wandungsbereichen des Hülsenteils bzw. Spannteils insbesondere ein Absatz oder eine Stufe angeordnet ist. So können das Spann- und/oder Hülsenteil beispielsweise als Präge- und/oder Biegestandteil ausgebildet sein. Dabei bilden die zwischen den die Klemmkeilflächen aufweisenden Wandungsbereichen des Hülsenteils bzw. Spannteils angeordneten Absätze oder Stufen Verstärkungen, die auch bei einem vergleichsweise dünnwandigen Spann- oder Hülsenteil die Übertragung relativ großer Klemmkräfte ermöglichen.

Vorteilhaft ist, wenn der Heizkörper an dem Hülsenteil befestigt ist, insbesondere mittels wenigstens einer Lötstelle. Das Hülsenteil kann dann bei gelöster Klemmverbindung zusammen mit dem Heizkörper axial von dem Düsenkörper abezogen bzw. auf diesen aufgesteckt werden. Bei von dem Düsenkörper demontiertem Heizkörper ist dieser außerdem in dem Hülsenteil gut vor mechanischer Beschädigung geschützt.

Vorteilhaft ist, wenn der Heizkörper eine elektrische Heizwicklung aufweist und wenn die Heizwicklung vorzugsweise in den zu den Axialenden des Düsenkörpers benachbarten Bereichen eine höhere Wicklungsdichte aufweist als in einem zwischen diesen Bereichen befindlichen Bereich. Die von der Heizwicklung an den Axialrichtung des Düsenkörpers zueinander versetzt angeordneten Stellen in den Düsenkörper eingekoppelte Heizleistung kann dann an den unterschiedlichen Stellen des Düsenkörpers jeweils benötigten Wärmefluß so angepaßt sein, daß sich entlang des Durchtrittskanals des Düsenkörpers ein etwa konstanter Temperaturverlauf ergibt.

Bei einer vorteilhaften Ausführungsform der Erfindung ist zwischen dem Heizkörper und dem Düsenkörper eine in radialer Richtung nachgiebige, vorzugsweise axial durchgehend geschlitzte Zwischenhülse angeordnet. Der Heizkörper ist dann zwischen der Zwischenhülse und dem Hülsenteil angeordnet, wobei die Zwischenhülse und das Hülsenteil gegebenenfalls eine den Heizkörper umgrenzende Kapselung bilden können. Zum Erreichen einer lokal unterschiedlichen Wärmeeinbringung in den Düsenkörper kann die Zwischenhülse an ihrer dem Heizkörper zugewandten Außenseite bereichsweise wenigstens eine radiale Aussparung aufweisen, an der die Wandung der Zwischenhülse bei in Klemmstellung befindlicher Zwischenhülse von dem Heizkörper beabstandet ist. Die Zwischenhülse kann aber auch an ihrer dem Düsenkörper zugewandten Innenseite bereichsweise wenigstens eine radiale Aussparung aufweisen, an der die Wandung der Zwischenhülse bei in Klemmstellung befindlicher Zwischenhülse von dem Düsenkörper oder einem zwischen dem Düsenkörper und der Zwischenhülse befindlichen weiteren Teil beabstandet ist. Auch durch diese Maßnahme kann eine lokal unterschiedliche Wärmeeinbringung in den Düsenkörper erreicht werden, sogar dann, wenn die Heizwendel des Heizkörpers in axialer Richtung der Zwischenhülse eine konstante Wickungsdichte aufweist.

Nachfolgend ist ein Ausführungsbeispiel der Erfindung anhand der Zeichnungen näher erläutert. Es zeigen:
- Fig. 1: einen Längsschnitt durch die Mittelebene einer Heißkanaldüse,
- Fig. 2: einen Querschnitt durch das Heizelement, die Klemmhülse und die Spannhülse der in Fig. 1 gezeigten Heißkanaldüse, wobei die Aufnahmen für das Betätigungswerkzeug strichliniert dargestellt sind, und
- Fig. 3: einen Längsschnitt durch die in Fig. 2 gezeigte Anordnung in der in Fig. 2 mit III bezeichneten Ebene.

Eine im ganzen mit 1 bezeichnete Heißkanaldüse für Spritzgießformen weist einen Düsenkörper 2 auf, der von einem Durchtrittskanal 3 für Schmelze durchsetzt ist, der an einem der Axialenden des Düsenkörpers 2 eine Düseneintrittsöffnung 4 zum Zuführen der Schmelze in das Innere des Düsenkörpers 2 und an dem anderen Axialende des Düsenkörpers 2 eine Düsenaustrittsöffnung 5 aufweist. Die Düseneintrittsöffnung 4 ist in Gebrauchsstellung mit einer an sich bekannten Zuführeinrichtung für die Schmelze verbunden, die beispielsweise eine beheizte Förderschnecke zum Fördern der Schmelze aufweisen kann.

Der Düsenkörper 2 hat eine als Buchse 6 ausgebildete Nadelführung in der eine Verschlußnadel 7 axial verschiebbar angeordnet ist, die in den Durchtrittskanal 3 eingreift und in Schließstellung mit ihrem freien Endbereich gegen den die Düsenaustrittsöffnung 5 umgrenzenden Rand des Düsenkörpers 2 abdichtet. In Offenstellung ist die Verschlußnadel 7 von der Düsenaustrittsöffnung 5 zurückgezogen und gibt diese zum Ausstoßen der Schmelze zumindest bereichsweise frei.

Am Außenumfang des Düsenkörpers 2 ist ein mantelförmiger Heizkörper 8 angeordnet, der einer Heizwendel aufweist, die sich am Außenumfang des Düsenkörpers 2 schraubenlinienförmig erstreckt. Die Heizwendel weist zwei parallel zueinander geführte Heizdrähte auf, die jeweils an dem der Düsenaustrittsöffnung 5 abgewandten Ende des Düsenkörpers 2 mit zu einer Heizstromquelle führenden elektrischen Anschlußleitungen 9 verbunden sind. An seinem Außenumfang ist der Heizkörper 8 von einem Hülsenteil 10 umgeben.

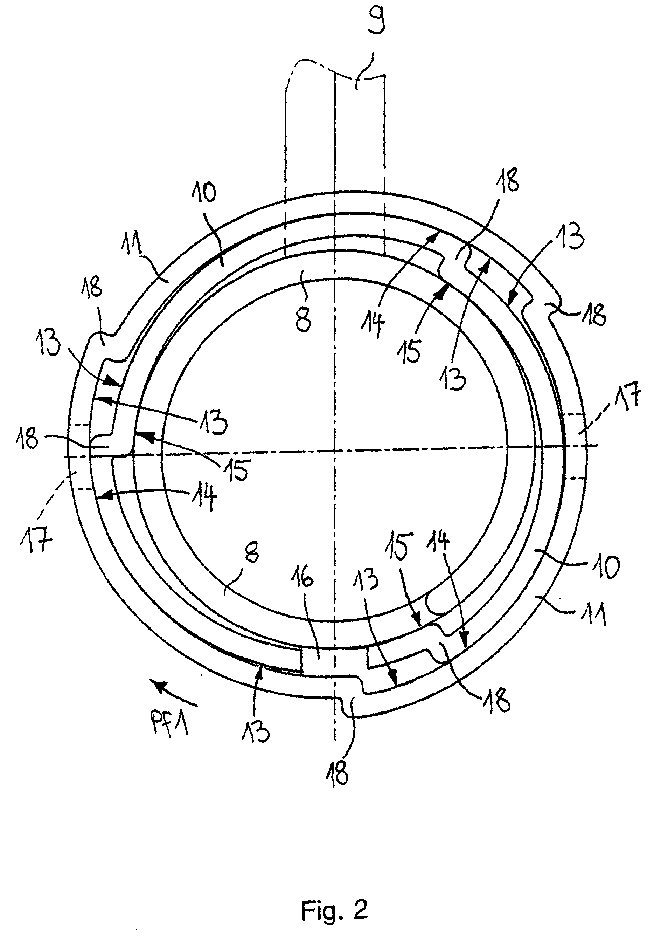

Das Hülsenteil 10 ist an seinem Außenumfang von einem als Spannhülse ausgebildeten Spannteil 11 umgrenzt, das um seine Längsachse 12 relativ zu dem Hülsenteil 10 zwischen einer Lösestellung und einer Klemmstellung verdrehbar ist. Wie anhand von Fig. 2 besonders gut erkennbar ist, weisen die Innenfläche des Spannteils 11 und die dieser zugewandte Außenfläche des Hülsenteils 10 jeweils eine von einer konzentrisch zu der Längsachse 12 angeordneten Zylindermantelfläche abweichende Formgebung auf. Um das Zusammenwirken dieser einander zugewandten Flächen besser zu verdeutlichen, sind die Abweichungen dieser Flächen von der Zylindermantelfläche in Fig. 2 verzerrt bzw. vergrößert dargestellt. Dabei ist erkennbar, daß die Innenfläche des Spannteils 11 und die Außenfläche des Hülsenteils 10 jeweils mehrere in Umfangsrichtung versetzt zueinander angeordnete Bereiche aufweist, die jeweils als Klemmkeilfläche 13 ausgebildet sind. In Fig. 2 ist deutlich erkennbar, daß die Klemmkeilflächen 13 der Teile 10, 11 jeweils eine Auflaufschräge aufweisen, an der in Klemmstellung jeweils eine Klemmkeilfläche 13 des anderen Teils 13, 12 mit einem Auflagebereich 14 anliegt.

In Fig. 2 ist erkennbar, daß die Klemmkeilflächen 13 jeweils an einem ihrer Umfangsenden einen kleineren Radius bzw. Abstand zur Längsachse 12 aufweisen als an ihrem anderen Umfangsende. Zwischen diesen Umfangsenden nimmt der Radius in Umfangsrichtung, ausgehend von der Stelle mit dem kleinsten zu der Stelle mit dem größten Radius, entlang der Klemmkeilfläche 13 jeweils stätig zu. Der kleinste Radius der Klemmkeilfläche 13 des Spannteils 11 ist größer als oder gleich dem kleinsten Radius den Hülsenteils 10 und der größte Radius des Spannteils 11 ist größer oder gleich dem größten Radius des Hülsenteils 10. Der kleinste Radius des Spannteils 11 ist kleiner als der größte Radius des Hülsenteils 10.

Wie anhand von Fig. 2 erkennbar ist, wird dadurch das in der Innenhöhlung des Spannteils 11 angeordnete Halteteil 10 beim Verdrehen des Spannteils 11 in Richtung des Pfeils Pf1 relativ zu dem drehfest angeordneten Halteteil 10 in der Innenhöhlung *des* Spannteils 11 eingeklemmt. Dabei werden die jeweils an den Auflagebereichen 14 befindlichen Wandungsbereiche des aus einem gegen die Klemmkraft elastisch nachgiebigen Material bestehenden Hülsenteils 10 etwa radial ausgelenkt und auf den Heizkörper 8 zubewegt. Das Hülsenteil 10 ist innenseitig an mehreren in Umfangsrichtung versetzt zueinander angeordneten Beaufschlagungsstellen 15 gegen den Außenumfang des in radialer Richtung nachgiebigen Heizkörpers 8 abgestützt. In Klemmstellung des Spannteils 11 wird ein Teil der von dem Spannteil 11 auf das Hülsenteil 10 ausgeübten Klemmkraft an den Beaufschlagungsstellen 15 als etwa radial wirkende Druckkraft auf den Heizkörper 8 übertragen, wodurch dieser mit seiner dem Hülsenteil 10 abgewandten Innenseite an den Düsenkörper 2 angedrückt wird. Dabei erfolgt eine derartige Druckbeaufschlagung des Heizkörpers 8 an mehreren, in Umfangsrichtung versetzt zueinander angeordneten Beaufschlagungsstellen 15 gleichzeitg, wodurch eine thermisch gut leitende Verbindung zwischen dem Heizkörper 8 und dem Düsenkörper 2 erreicht wird. Die von dem Heizkörper 8 erzeugte Wärme kann dadurch weitgehend gleichmäßig und verlustarm in den Düsenkörper 2 und den Durchtrittskanal 3 eingeleitet werden. Außerdem werden der Heizkörper 8, das Hülsenteil 10 und das Spannteil 11 in Klemmstellung an den Düsenkörper 2 fixiert.

In Fig. 2 ist erkennbar, daß das Hülsenteil 10 einen in axialer Richtung durchgängig über seine gesamte Länge verlaufenden Schlitz 16 aufweist. Dadurch sind die einzelnen Wandungsbereiche des Hülensteils 10 noch besser durch die Klemmkräfte in radialer Richtung gegen die Rückstellkraft ihres Werkstoffs verformbar und auf den Heizkörper 8 zubewegbar.

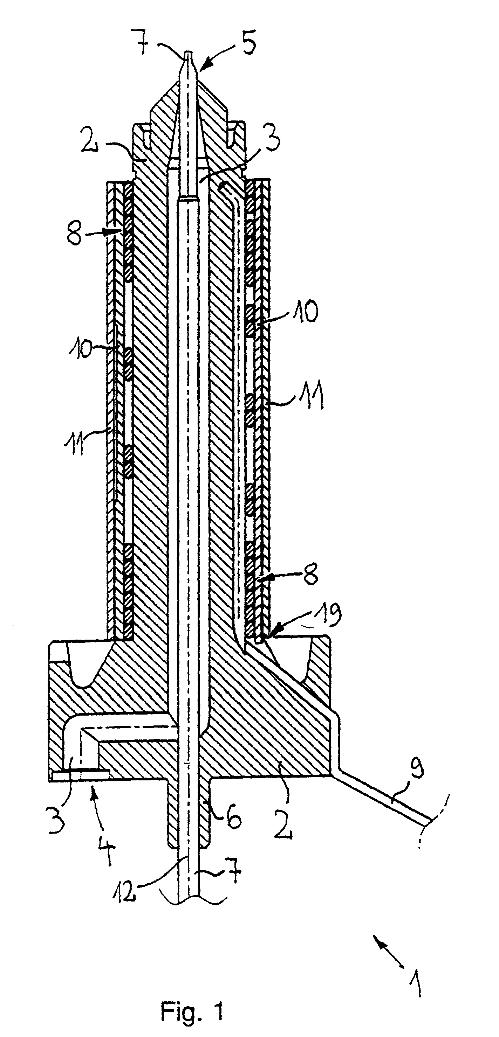

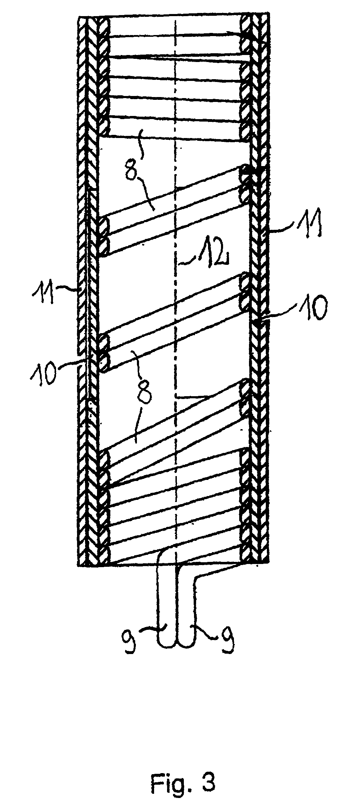

In Fig. 1 und 3 ist erkennbar, daß sich das Spannteil 11 und das Hülsenteil 10 jeweils über die gesamte Länge der Heizwände des Heizkörpers 8 erstreckt. Dadurch ist es möglich, sämtliche Wicklungen der Heizwände mit der aus dem Spannteil 11 und dem Hülsenteil 10 gebildeten Spannvorrichtung gleichzeitig an den Düsenkörper 2 anzudrücken.

Das Spannteil 11 weist an seiner Außenseite Angriffsstellen 17 für ein Betätigungswerkzeug auf, beispielsweise für einen Hakenschlüssel. Das Betätigungswerkzeug bildet in Gebrauchsstellung einen Hebelarm, der ein besseres Verpannen des Spannteils 11 gegen das Hülsenteil 10 ermöglicht. Die Angriffsstellen 17 sind durch Aufnahmevertiefungen in dem Spannteil 11 oder durch Wandungsdurchbrüche des Spannteils 11 gebildet. Das Betätigungswerkzeug kann sowohl beim Festspannen des Spannteils 11 durch eine Drehbewegung in Richtung des Pfeils Pf1, als auch beim Lösen des Spannteils 11 durch eine Drehbewegung in entgegengesetzter Richtung an den Angriffsstellen 17 angesetzt werden. Erwähnt werden soll noch, daß die Steigung bzw. Steigungshöhe der als Laufbahnen ausgebildeten Klemmkeilflächen 13 entsprechend dem für den Heizkörper 8 vorgesehenen Anpreßdruck gewählt sein kann. Dabei ist der Steigungswinkel so bemessen, daß das gegenüber dem Hülsenteil verdrehbare Spannelement 11 in Klemmstellung selbsthemmend an dem Hülsenteil 10 fixiert ist.

Das Hülsenteil 10 und das Spannteil 11 sind jeweils als Blechumformteil ausgebildet. Zwischen in Umfangsrichtung benachbart nebeneinander angeordneten, jeweils eine Klemmkeilfläche 13 aufweisenden Wandungsbereichen des Hülsenteils 10 bzw. des Spannteils 11 ist jeweils ein Absatz oder eine Stufe 18 angeordnet, die durch Biegen oder Abkanten hergestellt ist. Die Angriffsstellen 17 für das Betätigungswerkzeug sind durch Ausstanzen eines Wandungsbereich in das Spannteil 11 eingebracht.

Der Heizkörper 8 weist eine Heizwendel mit einem von einem Isolationsmaterial, wie z.B. einer Keramik, umgrenzten Heizleiter auf. Der Heizkörper 8 ist mit dem Hülsenteil 10 verlötet. Dabei sind die Lötstellen jeweils an den aneinander abgewandten Axialenden des Heizkörpers angeordnet. Der Heizkörper 8 kann dann zusammen mit dem Hülsenteil 10 in Lösestellung des Spannteils 11 axial von dem Düsenkörper 2 abgezogen werden. Der von dem Düsenkörper 2 demontierte Heizkörper 8 ist in dem Hülsenteil 10 vor mechanischer Beschädigung geschützt.

In Fig. 1 und 3 ist erkennbar, daß die Heizwendel des Heizkörpers 8 an unterschiedlichen, in Richtung der Längsachse 12 zueinander versetzten Stellen eine unterschiedliche Wicklungsdichte aufweist. Dadurch wird entlang des Durchtrittskanals 3 ein etwa gleichmäßiger Temperaturverlauf erreicht.

In Fig. 1 ist erkennbar, daß zwischen dem Hülsenteil 10 und dem Düsenkörper 2 eine Verdrehsicherung 19 angeordnet ist. Diese weist an dem in Gebrauchsstellung der Düsenaustrittsöffnung 5 abgewandten stirnseitigen Ende des Hülsenteils 10 einen in axialer Richtung vorstehenden Vorsprung auf, der in eine dazu passende Aufnahmevertiefung des Düsenkörpers 2 eingreift.

Zusammenfassend ergibt sich somit eine Heißkanaldüse 1 für Spritzgießformen, die einen Düsenkörper 2 mit einem mit einer Düsenaustrittsöffnung 5 für Schmelze verbundenen Durchtrittskanal 3 hat. Am Außenumfang des Düsenkörpers 2 ist wenigstens ein mantelförmiger Heizkörper 8 angeordnet ist. Dieser ist an seinem Außenumfang von einem Hülsenteil 10 umgrenzt, das in radialer Richtung nachgiebig ist. Das Hülsenteil 10 ist an seinem Außenumfang von wenigstens einem ringförmigen Spannteil 11 umgrenzt ist, das um seine Längsachse 12 relativ zu dem Hülsenteil 10 zwischen einer Lösestellung und einer Klemmstellung verdrehbar ist. Die einander zugewandten Flächen des Hülsenteils 10 und des Spannteils 11 weisen jeweils eine von einer konzentrisch zu der Längsachse 12 angeordneten Zylindermantelfläche abweichende Formgebung auf. Die Fläche wenigstens eines dieser Teile 10, 11 ist zumindest bereichsweise als Klemmkeilfläche 13 ausgebildet, die in Klemmstellung in einer orthogonal zu der Längsachse 12 angeordneten Ebene eine Auflaufschräge aufweist, an der die Fläche des anderen Teils 11, 10 mit einem Auflagebereich anliegt.

## Patentansprüche

1. Heißkanaldüse (1) für Spritzgießformen, mit einem einen Durchtrittskanal (3) mit einer Düsenaustrittsöffnung (5) für Schmelze aufweisenden Düsenkörper (2), an dessen Außenumfang wenigstens ein mantelförmiger Heizkörper (8) zum Beheizen des Düsenkörpers (2) angeordnet ist, wobei der Heizkörper (8) an seinem Außenumfang von einem Hülsenteil (10) umgrenzt ist, und wobei das Hülsenteil (10) und der Heizkörper (8) in radialer Richtung nachgiebig sind, **dadurch gekennzeichnet, daß** das Hülsenteil (10) an seinem Außenumfang von wenigstens einem ringförmigen Spannteil (11) umgrenzt ist, das um seine Längsachse (12) relativ zu dem Hülsenteil (10) zwischen einer Lösestellung und einer Klemmstellung verdrehbar ist, daß die einander zugewandten Flächen des Hülsenteils (10) und des Spannteils (11) jeweils eine von einer konzentrisch zu dieser Längsachse (12) angeordneten Zylindermantelfläche abweichende Formgebung aufweisen, und daß wenigstens eine dieser einander zugewandten Flächen zumindest bereichsweise als Klemmkeilfläche (13) ausgebildet ist, die eine Auflaufschräge aufweist, an der die Fläche des anderen Teils (10, 11) mit einem Auflagebereich (14) anliegt.

2. Heißkanaldüse (1) nach Anspruch 1, **dadurch gekennzeichnet, daß** das Hülsenteil (10) als geschlitztes Hülsenteil (10) mit einem durchgehend über seine axiale Erstreckung verlaufenden, an seinen Stirnseiten randoffenen Schlitz (16) ausgebildet ist.

3. Heißkanaldüse (1) nach Anspruch 1 oder 2, **dadurch gekennzeichnet, daß** wenigstens eine der einander zugewandten Flächen des Hülsenteils (10) und des Spannteils (11) mehrere, insbesondere drei in Umfangsrichtung versetzt zueinander angeordnete, jeweils eine Klemmkeilfläche (13) aufweisende Bereiche hat, und daß diese Bereiche an dem jeweiligen Bereich jeweils zugeordneten Auflagestellen des anderen Teils (10, 11) anliegen.

4. Heißkanaldüse (1) nach einem der Ansprüche 1 bis 3, **dadurch gekennzeichnet, daß** das Spannteil (11) ring- oder hülsenförmig ausgebildet ist und an unterschiedlichen, in Umfangsrichtung zueinander versetzten Stellen unterschiedliche Innendurchmesser aufweist, daß das Hülsenteil (10) an unterschiedlichen, in Umfangsrichtung zueinander versetzten Stellen unterschiedliche Außendurchmesser aufweist, daß der kleinste Innendurchmesser des Spannteils (11) größer als oder gleich dem kleinsten Außendurchmesser des Hülsenteils (10) und der größte Innendurchmesser des Spannteils (11) größer als oder gleich dem größten Außendurchmesser des Hülsenteils (10) ist, und daß der kleinste Innendurchmesser des Spannteils (11) kleiner als der größte Außendurchmesser des Hülsenteils (10) ist.

5. Heißkanaldüse (1) nach einem der Ansprüche 1 bis 4, **dadurch gekennzeichnet, daß** das Spannteil (11) als Spannhülse ausgebildet ist, und daß sich die Spannhülse (11) vorzugsweise über die gesamte Länge des Hülsenteils (10) erstreckt.

6. Heißkanaldüse (1) nach einem der Ansprüche 1 bis 5, **dadurch gekennzeichnet, daß** das Spannteil (11) Anriffsstellen (17) zum Verbinden mit einem Betätigungswerkzeug aufweist und daß die Angriffsstellen (17) vorzugsweise als am Außenumfang des Spannteils angeordnete Aufnahmevertiefungen ausgebildet sind.

7. Heißkanaldüse (1) nach einem der Ansprüche 1 bis 6, **dadurch gekennzeichnet, daß** zwischen dem Spannteil und dem Düsenkörper (2) eine Verdrehsicherung (19) angeordnet ist.

8. Heißkanaldüse (1) nach einem der Ansprüche 1 bis 7, **dadurch gekennzeichnet, daß** das Hülsenteil (10) und/oder das Spannteil (11) als Blechumformteil ausgebildet ist, und daß zwischen in Umfangsrichtung benachbart nebeneinander angeordneten, jeweils eine Klemmkeilfläche (13) aufweisenden Wandungsbereichen des Hülsenteils (10) bzw. Spannteils (11) insbesondere ein Absatz oder eine Stufe (18) angeordnet ist.

9. Heißkanaldüse (1) nach einem der Ansprüche 1 bis 8, **dadurch gekennzeichnet, daß** der Heizkörper (8) an dem Hülsenteil (10) befestigt ist, insbesondere mittels wenigstens einer Lötstelle.

10. Heißkanaldüse (1) nach einem der Ansprüche 1 bis 9, **dadurch gekennzeichnet, daß** der Heizkörper (8) eine elektrische Heizwicklung aufweist und daß die Heizwicklung vorzugsweise in den zu den Axialenden des Düsenkörpers (2) benachbarten Bereichen eine höhere Wicklungsdichte aufweist als in einem zwischen diesen Bereichen befindlichen Bereich.

11. Heißkanaldüse (1) nach einem der Ansprüche 1 bis 10, **dadurch gekennzeichnet, daß** zwischen dem Heizkörper (8) und dem Düsenkörper (2) eine in radialer Richtung nachgiebige, vorzugsweise axial durchgehend geschlitzte Zwischenhülse angeordnet ist.

## Claims

1. Hot runner nozzle (1) for injection moulds, having a nozzle body (2) comprising a throughflow channel (3) with a nozzle outlet opening (5) for melts, on the outer periphery of which is mounted at least one jacket-type heater (8) for heating the nozzle body (2), the heater (8) being bounded on its outer periphery by a sleeve member (10), the sleeve member (10) and the heater (8) yielding in the radial direction, **characterised in that** the sleeve member (10) is bounded on its outer periphery by at least one annular clamping member (11) which is rotatable about its longitudinal axis (12) relative to the sleeve member (10) between a release position and a clamping position, **in that** the facing surfaces of the sleeve member (10) and the clamping member (11) are each shaped differently from an outer cylindrical surface arranged concentrically about this longitudinal axis (12), and **in that** at least one of these facing surfaces is constructed, at least in parts, as a wedge-shaped clamping surface (13) which has an approach slope on which the surface of the other member (10, 11) rests by means of a contact region (14).

2. Hot runner nozzle (1) according to claim 1, **characterised in that** the sleeve member (10) is constructed as a slotted sleeve member (10) having a slot (16) which extends continuously along its axial dimension and is open at the edges at its end faces.

3. Hot runner nozzle (1) according to claim 1 or 2, **characterised in that** at least one of the facing surfaces of the sleeve member (10) and the clamping member (11) has several, particularly three, regions arranged offset from one another and each comprising a wedge-shaped clamping surface (13), and **in that** these regions abut on the appropriate region of associated contact areas on the other member (10, 11).

4. Hot runner nozzle (1) according to one of claims 1 to 3, **characterised in that** the clamping member (11) is annular or sleeve-shaped and has different internal diameters at various points offset from one another in the circumferential direction, **in that** the sleeve member (10) has different external diameters at various points offset from one another in the circumferential direction, **in that** the smallest internal diameter of the clamping member (11) is greater than or equal to the smallest external diameter of the sleeve member (10) and the maximum internal diameter of the clamping member (11) is greater than or equal to the maximum external diameter of the sleeve member (10), and **in that** the smallest internal diameter of the clamping member (11) is smaller than the maximum external diameter of the sleeve member (10).

5. Hot runner nozzle (1) according to one of claims 1 to 4, **characterised in that** the clamping member (11) is constructed as a clamping sleeve and the clamping sleeve (11) preferably extends over the entire length of the sleeve member (10).

6. Hot runner nozzle (1) according to one of claims 1 to 5, **characterised in that** the clamping member (11) has points of attack (17) for connection to an actuating tool and **in that** the points of attack (17) are preferably in the form of accommodating recesses provided on the outer periphery of the clamping member.

7. Hot runner nozzle (1) according to one of claims 1 to 6, **characterised in that** a torsion preventer (19) is provided between the clamping member and the nozzle body (2).

8. Hot runner nozzle (1) according to one of claims 1 to 7, **characterised in that** the sleeve member (10) and/or the clamping member (11) is shaped from sheet metal and **in that** an offset or step (18), in particular, is provided between circumferentially adjacent wall portions of the sleeve member (10) or clamping member (11) each comprising a wedge-shaped clamping surface (13).

9. Hot runner nozzle (1) according to one of claims 1 to 8, **characterised in that** the heater (8) is fixed to the sleeve member (10), particularly by means of at least one soldering point.

10. Hot runner nozzle (1) according to one of claims 1 to 9, **characterised in that** the heater (8) has an electric heating coil and **in that** the heating coil preferably has a higher winding density in the areas adjacent to the axial ends of the nozzle body (2) than in an area situated between these areas.

11. Hot runner nozzle (1) according to one of claims 1 to 10, **characterised in that** between the heater (8) and the nozzle body (2) is provided a radially yielding intermediate sleeve, preferably having continuous axial slots.

## Revendications

1. Buse à canal chaud (1) pour des moules d'injection, comprenant un corps de buse (2), qui est muni d'un canal de passage (3) avec un orifice de sortie (5) de la matière en fusion et contre la périphérie extérieure duquel est disposé au moins un corps de chauffe (8) formant un gainage et destiné à chauffer le corps de buse (2), le corps de chauffe (8) étant délimité sur sa périphérie extérieure par une gaine (10), sachant que la gaine (10) et le corps de chauffe (8) sont flexibles dans le sens radial, **caractérisée en ce que** la gaine (10) est délimitée sur sa périphérie extérieure par au moins un élément de serrage (11) annulaire, qui est susceptible de tourner autour de son axe longitudinal (12) par rapport à la gaine (10), entre une position de desserrage et une position de blocage, **en ce que** les faces orientées l'une vers l'autre de la gaine (10) et de l'élément de serrage (11) ont chacune une configuration différente d'une paroi latérale cylindrique disposée concentriquement par rapport à cet axe longitudinal (12), et **en ce qu'**au moins une de ces faces orientées l'une vers l'autre est conçue au moins dans certaines zones sous forme de surface inclinée de blocage (13) qui comporte un plan incliné ascendant, contre lequel vient en appui une zone de contact (14) de la surface de l'autre élément (10, 11).

2. Buse à canal chaud (1) selon la revendication 1, **caractérisée en ce que** la gaine (10) est conçue sous forme de gaine (10) fendue, comportant une fente (16) s'étendant en continu sur toute la longueur axiale et ouverte sur le bord de ses faces frontales.

3. Buse à canal chaud (1) selon la revendication 1 ou 2, **caractérisée en ce qu'**au moins l'une des surfaces orientées l'une vers l'autre de la gaine (10) et de l'élément de serrage (11) comportent plusieurs, en particulier trois zones décalées les unes par rapport aux autres dans le sens périphérique et comprenant chacune une surface inclinée de blocage (13) et **en ce que** ces zones sont en appui contre des points de contact associés respectivement à la zone correspondante de l'autre élément (10, 11).

4. Buse à canal chaud (1) selon une des revendications 1 à 3, **caractérisée en ce que** l'élément de serrage (11) est conçu en forme d'anneau ou de manchon et comprend plusieurs diamètres intérieurs dans différentes zones décalées les unes des autres dans le sens périphérique, **en ce que** la gaine (10) comporte plusieurs diamètres extérieurs différents dans différentes zones décalées les unes des autres dans le sens périphérique, **en ce que** le plus petit diamètre intérieur de l'élément de serrage (11) est supérieur ou égal au plus petit diamètre extérieur de la gaine (10) et le plus grand diamètre intérieur de l'élément de serrage (11) est supérieur ou égal au plus grand diamètre extérieur de la gaine (10), et **en ce que** le plus petit diamètre intérieur de l'élément de serrage (11) est inférieur au plus grand diamètre extérieur de la gaine (10).

5. Buse à canal chaud (1) selon une des revendications 1 à 4, **caractérisée en ce que** l'élément de serrage (11) est conçu sous forme de manchon de serrage, et **en ce que** le manchon de serrage (11) s'étend de préférence sur toute la longueur de la gaine (10).

6. Buse à canal chaud (1) selon une des revendications 1 à 5, **caractérisée en ce que** l'élément de serrage (11) comporte des zones de prise (17) destinées à la liaison avec un outil de maniement, et **en ce que** les zones de prise (17) sont de préférence conçues sous forme de cavités de logement réalisées sur la périphérique extérieure de l'élément de serrage.

7. Buse à canal chaud (1) selon une des revendications 1 à 6, **caractérisée en ce qu'**une protection anti-rotation (19) est agencée entre l'élément de serrage et le corps de buse (2).

8. Buse à canal chaud (1) selon une des revendications 1 à 7, **caractérisée en ce que** la gaine (10) et/ou l'élément de serrage (11) est conçu sous forme de pièce métallique façonnée, et **en ce qu'**il est prévu en particulier un talon ou un épaulement (18) entre des zones de paroi de la gaine (10) ou de l'élément de serrage (11), juxtaposées dans le sens périphérique et comportant chacune une surface inclinée de blocage (13).

9. Buse à canal chaud (1) selon une des revendications 1 à 8, **caractérisée en ce que** le corps de chauffe (8) est fixé contre la gaine (10), en particulier par l'intermédiaire d'au moins une zone de brasage.

10. Buse à canal chaud (1) selon une des revendications 1 à 9, **caractérisée en ce que** le corps de chauffe (8) comporte une spirale de chauffage électrique et **en ce que** la spirale de chauffage présente, de préférence, une densité de spires plus élevée dans les zones à proximité des extrémités axiales du corps de buse (2) que dans une partie située entre ces zones.

11. Buse à canal chaud (1) selon une des revendications 1 à 10, **caractérisée en ce qu'**une gaine intermédiaire flexible dans le sens radial, de préférence fendue en continu dans le sens axial, est agencée entre le corps de chauffe (8) et le corps de buse (2).
